# EUROPEAN PATENT APPLICATION

(11) **EP 3 068 172 A1**
(43) Date of publication of application: **14.09.2016**
(21) Application number: 14860618.9
(22) Date of filing: 06.11.2014
(51) Int. Cl.: H04W 48/16

(54) **SENDING METHOD AND SENDING DEVICE FOR D2D DISCOVERY SIGNAL**

(30) Priority: 08.11.2013 CN 201310553883; 04.03.2014 CN 201410076858
(71) Applicant: China Academy of Telecommunications Technology, Hai Dian District Beijing 100191 (CN)
(72) Inventor: CHEN, Wenhong, Beijing 100191 (CN); GAO, Qiubin, Beijing 100191 (CN); PENG, Ying, Beijing 100191 (CN)
(74) Representative: Studio Torta S.p.A.
(86) International application number: PCT/CN2014/090496
(87) International publication number: WO 2015/067197

(57) **Abstract**

The present disclosure provides a method and a device for transmitting a D2D discovery signal. The method may include steps of: determining, by a UE, system discovery resources; determining a discovery resource set desired for the transmission of the D2D discovery signal; and transmitting the D2D discovery signal through physical resources corresponding to the determined discovery resource set. According to the present disclosure, the D2D discovery signal is transmitted by the UE using the physical resources in the discovery resource set. As a result, it is able for the UE to use a part of the system discovery resources to transmit the D2D discovery signal, thereby to prevent a large number of UEs from using identical system discovery resources to transmit the D2D discovery signals, prevent the occurrence of mutual interference due to the simultaneous transmission of too many discovery signals, prevent the normal communication from being adversely affected and improve the discovery performance between the UEs.

## Description

### CROSS-REFERENCE TO RELATED APPLICATION

The present application claims priorities of the Chinese patent application No.201310553883.4 filed before the SIPO on November 8, 2013 and entitled "method and device for transmitting device-to-device discovery signal", and the Chinese patent application No.201410076858.6 filed before the SIPO on March 4, 2014 and entitled "method and device for transmitting device-to-device discovery signal", which are incorporated herein by reference in their entireties.

### TECHNICAL FIELD

The present disclosure relates to the field of communication technology, in particular to a method and a device for transmitting a device-to-device (D2D) discovery signal.

### BACKGROUND

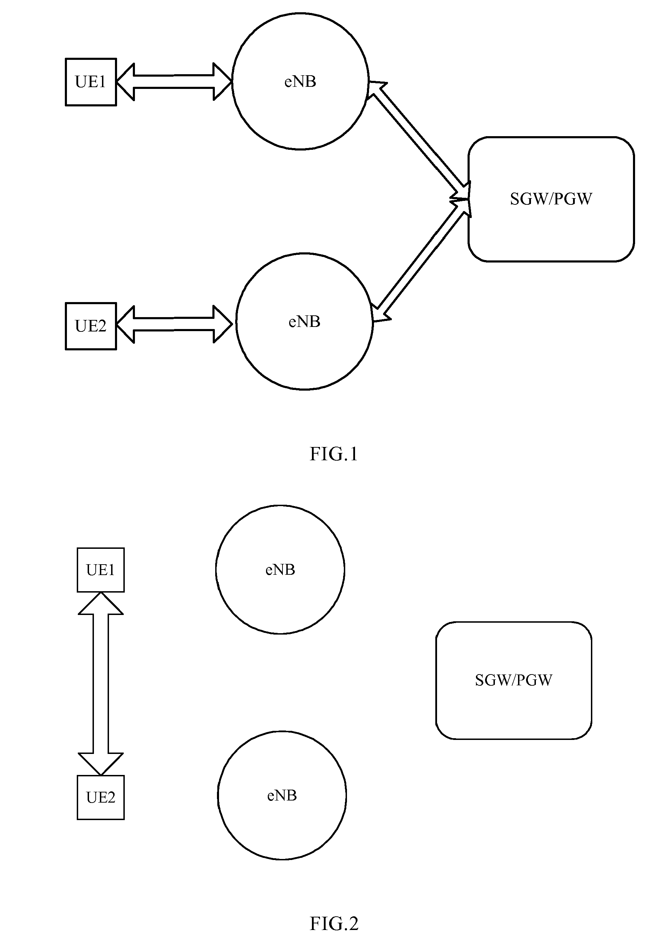

As shown in Fig.1, which shows a data communication procedure between two User Equipments (UEs) in a conventional cellular communication technology, services, such as audio and data services, are interacted between the two UEs via a core network and base stations (e.g., evolved Nodes B (eNBs)) where they reside respectively. The core network may include a Packet Data Network (PDN) Gateway/Service Gateway.

A Device-to-Device (D2D) technology refers to a mode where the data may be transmitted between the adjacent UEs within a short range via a direct link, without being forwarded via a central node (i.e., a base station), as shown in Fig.2. Because of such features as short-range and direct communication, the D2D technology has the following advantages. (1) Due to the short-range and direct communication mode for the UEs, it is able to provide high data rate, low delay and low power consumption. (2) Due to the UEs distributed over a network and the short-range D2D communication link, it is able to utilize spectral resources efficiently. (3) The D2D direct communication mode may meet the requirements on sharing the local data for the services such as wireless Peer-to-Peer (P2P) services, and thereby it is able to provide the data services in a flexible manner. (4) The D2D direct communication mode may make use of the large quantity of UEs distributed over the network, so it is able to expand a coverage range of the network.

A Long-Term Evolution (LTE) D2D technology refers to a D2D discovery and communication procedure operating at an LTE authorized frequency band and controlled by an LTE network. It may fully take advantage of the D2D technology, and meanwhile may overcome some drawbacks, e.g., uncontrollable interference, of the conventional D2D technology under the control of the LTE network. Due to the introduction of the LTE D2D characteristics, the LTE technology may progress from a pure wireless mobile cellular communication technology toward a Universal Connectivity Technology.

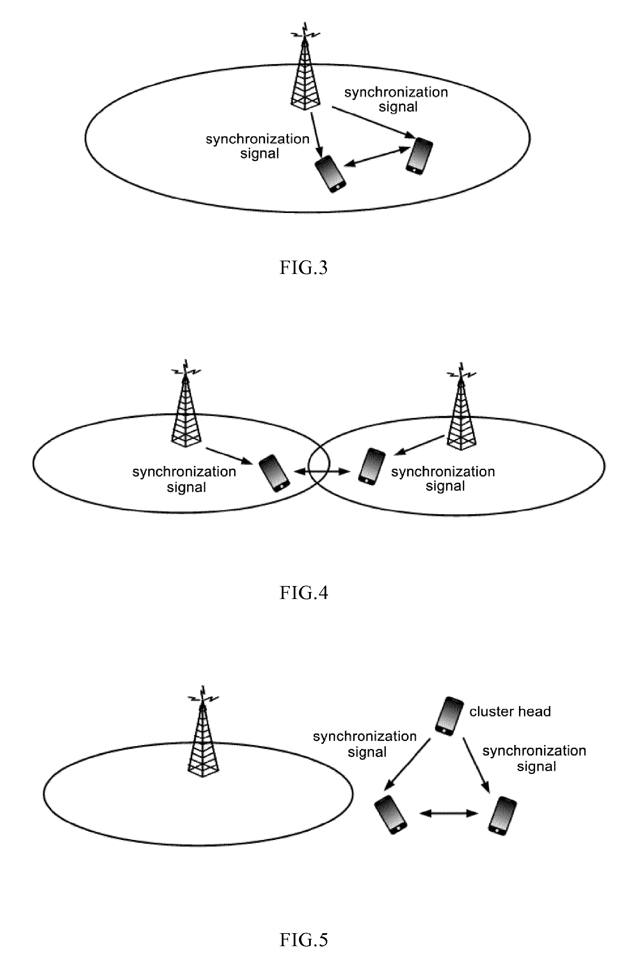

The LTE D2D technology includes both D2D discovery and D2D communication. The former refers to a situation where one D2D UE discovers an adjacent D2D UE via a discovery signal. The discovery signal may carry identification information, e.g., equipment information, application information and service type. In addition, the D2D UE discovery may be applied to various scenarios.
Scenario 1: intra-cell discovery. As shown in Fig.3, for the intra-cell discovery, when the UEs are synchronized with a network side, they may be synchronized with each other due to their synchronization with the network side. Hence, they may discover each other on a synchronous system discovery resource. The resource desired for the discovery may also be acquired from the network side.
Scenario 2: inter-cell discovery. As shown in Fig.4, for the inter-cell discovery, two cells may not be synchronized with each other, and the two UEs may not be synchronized with each other either due to their different synchronization with the network side, so it is impossible for the two UEs to discover each other directly. In addition, each UE may not know the system discovery resource used by the adjacent cell.
Scenario 3: network-coverage-free discovery. As shown in Fig.5, for the network-coverage-free discovery, the UEs are not synchronized with each other either, and at this time, it is required to enable them to be synchronized first, so as to discover each other. In the case of no network connection, a cluster consisting of adjacent nodes may include a cluster head to send a synchronization signal, so as to enable the surrounding UEs to be synchronized with the cluster head, thereby to enable all the UEs to be synchronized with, and discover, each other. Here, a role of the cluster head in synchronization is similar to a role of the base station in the presence of network coverage.

There at least exist the following two modes for the D2D UE discovery. (A) Direct discovery mode. A discovery signal carrying a discovery message may be sent by a discovered UE, and the other UE may detect the discovery message so as to discover and identify the discovered UE. Identification information of the discovered UE, e.g., equipment identifier (ID) and application ID, is carried in the discovery message. (B) Request-response mode. A discovery signal carrying a request message may be sent by a discovering UE, and after detecting the request message, the other UE may determine whether or not it is the target UE or whether or not it wants to be discovered. Then, the other UE may determine whether or not to transmit a corresponding response message in accordance with a determination result. The discovering UE detects the response signal and performs the discovery. The request message and the response message may each carry the identification information.

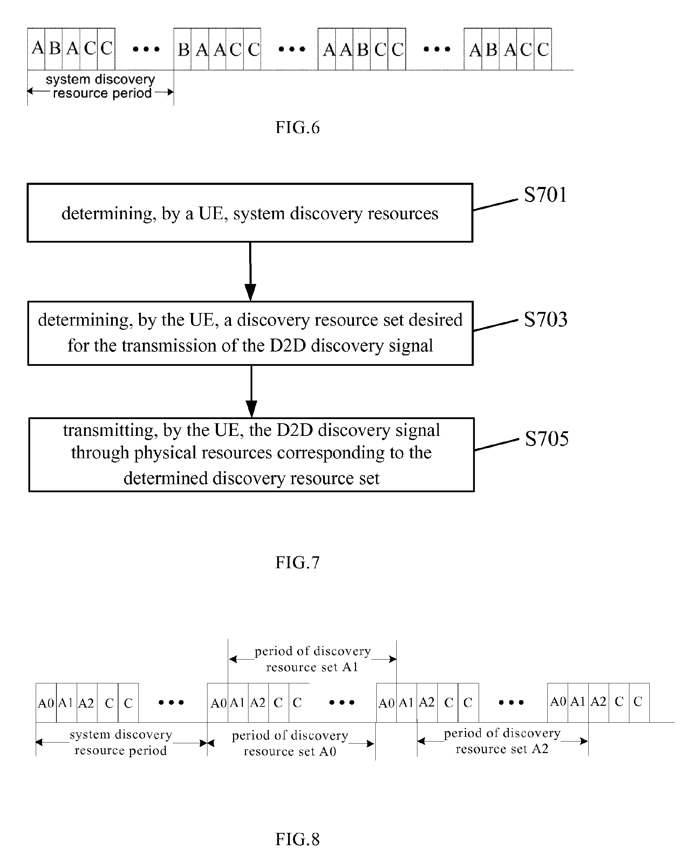

In addition, during the D2D discovery, each UE needs to know a reception resource region for receiving the discovery signal from the other UE, and know a transmission resource region for transmitting its own discovery signal. Due to hardware restrictions, it is impossible for each UE to transmit and receive the discovery signals simultaneously within one subframe. Usually, the system discovery resources include a subframe set, or a Physical Resource Block (PRB) set, as well as an occurrence period of the subframe set or the PRB set. This period is just a system discovery resource period. As shown in Fig.6, several subframes may be contained within the system discovery resource period. Subframe A is used for receiving the discovery signal by the UE, subframe B is used for transmitting the discovery signal by the UE, and subframe C is a cellular subframe. Each subframe includes several PRBs (not shown in Fig.6), and usually these subframes or PRBs are continuous uplink or downlink resources (e.g., continuous uplink subframes). Within each system discovery resource period, each UE may detect the discovery signal from the other UE within a subframe where no discovery signal is to be transmitted (i.e., the subframes other than subframe B). In the presence of network connection, the system discovery resources are usually configured by the base station, and in the absence of network connection, they may be configured by the cluster head or may be predefined. In addition, the system discovery resources (i.e., subframes) where the UE is allowed to transmit its own discovery signal may also be configured by the network or cluster head, or determined in accordance with a predetermined rule. Usually, each UE can merely know the system discovery resource period within which the discovery signal may be transmitted, and a probability for the transmission. However, the physical resources on which the discovery signal is to be transmitted need to be selected by the UE itself from the available resources.

Moreover, the system discovery resources occur periodically, and when there are a large number of system discovery resources, each UE may transmit the discovery signal within each system discovery resource period, so as to increase the probability of the UE to be discovered. However, when there are a small number of system discovery resources but each UE transmits the discovery signal within each system discovery resource period (i.e., a period for transmitting the discovery signal is identical to the system discovery resource period), serious mutual interference may occur due to too many discovery signals within one period, and thereby the D2D discovery performance will be adversely affected.

Currently, there is an urgent need to propose a solution for controlling the physical resources used by the UEs during the transmission of the D2D discovery signals, so as to prevent the discovery performance from deteriorating and prevent the normal communication from being adversely affected.

### SUMMARY

An object of the present disclosure is to provide a method and a device for transmitting a D2D discovery signal, so as to enable each UE to use a part of the system discovery resources to transmit the D2D discovery signal, thereby to prevent a large number of UEs from using identical system discovery resources to transmit the D2D discovery signals, prevent the occurrence of mutual interference due to the simultaneous transmission of too many discovery signals, prevent the discovery performance from deteriorating and prevent the normal communication from being adversely affected.

In one aspect, the present disclosure provides a method for transmitting a D2D discovery signal, including steps of: determining, by a UE, system discovery resources; determining, by the UE, a discovery resource set desired for the transmission of the D2D discovery signal; and transmitting, by the UE, the D2D discovery signal through physical resources corresponding to the determined discovery resource set. The system discovery resources may include a plurality of discovery resource sets.

Alternatively, the step of determining, by the UE, the system discovery resources may include: determining, by the UE, the plurality of discovery resource sets included in the system discovery resources, and the step of determining, by the UE, the discovery resource set desired for the transmission of the D2D discovery signal may include: selecting, by the UE, the discovery resource set desired for the transmission of the D2D discovery signal from the determined discovery resource sets. The plurality of discovery resource sets is configured by a base station for the UE, or pre-configured at a UE side.

Alternatively, the step of determining, by the UE, the discovery resource set desired for the transmission of the D2D discovery signal may include: determining, by the UE, the number of the discovery resource sets in the system discovery resources, determining physical resources corresponding to each discovery resource set in accordance with the number of the discovery resource sets and the system discovery resources, and selecting the discovery resource set desired for the transmission of the D2D discovery signal.

Alternatively, the step of determining the number of the discovery resource sets in the system discovery resources may include: determining the number of the discovery resource sets in the system discovery resources in accordance with a mapping relationship between a size of the system discovery resources and the number of the discovery resource sets; or determining the number of the discovery resource sets in the system discovery resources in accordance with a system discovery resource period and a discovery resource set period; or determining the number of the discovery resource sets in the system discovery resources in accordance with indication information indicating the number of the discovery resource sets from a network side or cluster head.

Alternatively, the mapping relationship may be pre-agreed, or indicated by the network side or the cluster head, and the discovery resource set period may be pre-agreed, or indicated by the network side or the cluster head.

Alternatively, the step of determining the physical resources corresponding to each discovery resource set in accordance with the number of the discovery resource sets and the system discovery resources may include: allocating the system discovery resources within each system discovery resource period equally to each discovery resource set in accordance with the number of the discovery resource sets, so as to determine the physical resources corresponding to each discovery resource set; or selecting for different discovery resource sets the system discovery resources within different system discovery resource periods in accordance with a size of each system discovery resource period and the number of the discovery resource sets, so as to determine the physical resources corresponding to each discovery resource set.

Alternatively, the step of selecting, by the UE, the discovery resource set desired for the transmission of the D2D discovery signal may include at least one of: selecting the discovery resource set desired for the transmission of the D2D discovery signal in accordance with the indication information from the network side or the cluster head; selecting the discovery resource set desired for the transmission of the D2D discovery signal randomly from the plurality of discovery resource sets; selecting the discovery resource set desired for the transmission of the D2D discovery signal in accordance with an ID of the UE and a predetermined correspondence between the ID and the discovery resource set; and selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, the step of determining, by the UE, the discovery resource set desired for the transmission of the D2D discovery signal may include: acquiring by calculation, from the system discovery resources, system discovery resources capable of being used by the UE to transmit the D2D discovery signal in accordance with the ID of the UE, as the discovery resource set desired for the transmission of the D2D discovery signal.

Alternatively, the ID of the UE may include at least one selected from the group consisting of a D2D ID, an application ID, a Cell Radio Network Temporary Identifier (C-RNTI), a cell ID and a cluster ID.

Alternatively, the step of determining, by the UE, the discovery resource set desired for the transmission of the D2D discovery signal may include: selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, the format of the D2D discovery signal may include at least one selected from the group consisting of a discovery sequence, a discovery message, a request message and a response message.

In another aspect, the present disclosure provides in some embodiments a device for transmitting a D2D discovery signal, including: a first determination module configured to determine system discovery resources; a second determination module configured to determine a discovery resource set desired for the transmission of the D2D discovery signal; and a transmission module configured to transmit the D2D discovery signal through physical resources corresponding to the determined discovery resource set. The system discovery resources may include a plurality of discovery resource sets.

Alternatively, when determining the system discovery resources, the first determination module may be configured to determine the plurality of discovery resource sets included in the system discovery resources, and when determining the discovery resource set desired for the transmission of the D2D discovery signal, the second determination module may be configured to select the discovery resource set desired for the transmission of the D2D discovery signal from the determined discovery resource sets. The plurality of discovery resource sets may be configured by a base station for the device, or pre-configured at a device side.

Alternatively, when determining the discovery resource set desired for the transmission of the D2D discovery signal, the second determination module may be configured to determine the number of the discovery resource sets in the system discovery resources, determine physical resources corresponding to each discovery resource set in accordance with the number of the discovery resource sets and the system discovery resources, and select the discovery resource set desired for the transmission of the D2D discovery signal.

Alternatively, the second determination module may be further configured to determine the number of the discovery resource sets in the system discovery resources in accordance with a mapping relationship between a size of the system discovery resources and the number of the discovery resource sets, or determine the number of the discovery resource sets in the system discovery resources in accordance with a system discovery resource period and a discovery resource set period, or determine the number of the discovery resource sets in the system discovery resources in accordance with indication information indicating the number of the discovery resource sets from a network side or cluster head.

Alternatively, the mapping relationship may be pre-agreed, or indicated by the network side or the cluster head, and the discovery resource set period may be pre-agreed, or indicated by the network side or the cluster head.

Alternatively, when determining the physical resources corresponding to each discovery resource set in accordance with the number of the discovery resource sets and the system discovery resources, the second determination module may be configured to allocate the system discovery resources within each system discovery resource period equally to each discovery resource set in accordance with the number of the discovery resource sets, so as to determine the physical resources corresponding to each discovery resource set; or select for different discovery resource sets the system discovery resources within different system discovery resource periods in accordance with a size of each system discovery resource period and the number of the discovery resource sets, so as to determine the physical resources corresponding to each discovery resource set.

Alternatively, the second determination module may be configured to select the discovery resource set desired for the transmission of the D2D discovery signal in at least one of the following ways: select the discovery resource set desired for the transmission of the D2D discovery signal in accordance with the indication information from the network side or the cluster head; select the discovery resource set desired for the transmission of the D2D discovery signal randomly from the plurality of discovery resource sets; select the discovery resource set desired for the transmission of the D2D discovery signal in accordance with an ID of the UE and a predetermined correspondence between the identifier and the discovery resource set; and select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, when determining the discovery resource set desired for the transmission of the D2D discovery signal, the second determination module may be configured to acquire by calculation, from the system discovery resources, system discovery resources capable of being used by the device to transmit the D2D discovery signal in accordance with the ID of the UE, as the discovery resource set desired for the transmission of the D2D discovery signal.

Alternatively, the ID of the device may include at least one selected from the group consisting of a D2D ID, an application ID, a C-RNTI, a cell ID and a cluster ID.

Alternatively, when determining the discovery resource set desired for the transmission of the D2D discovery signal, the second determination module may be configured to select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, the format of the D2D discovery signal may include at least one selected from the group consisting of a discovery sequence, a discovery message, a request message and a response message.

In yet another aspect, the present disclosure provides in some embodiments a UE, including a processor, a transceiver and a memory. The processor is configured to read a program stored in the memory so as to determine system discovery resources, determine a discovery resource set desired for the transmission of a D2D discovery signal, and transmit, via the transceiver, the D2D discovery signal through physical resources corresponding to the determined discovery resource set. The transceiver is configured to receive and transmit data under the control of the processor. The memory is configured to store data desired for the operation of the processor. The system discovery resources include a plurality of discovery resource sets.

Alternatively, when determining the system discovery resources, the processor may be configured to read a program stored in the memory, so as to determine the plurality of discovery resource sets included in the system discovery resources, and when determining the discovery resource set desired for the transmission of the D2D discovery signal, the processor may be configured to read a program stored in the memory so as to select the discovery resource set desired for the transmission of the D2D discovery signal from the determined plurality of discovery resource sets. The plurality of discovery resource sets may be configured by a base station for the UE, or pre-configured at a UE side.

Alternatively, when determining the discovery resource set desired for the transmission of the D2D discovery signal, the processor may be configured to read a program stored in the memory, so as to: determine the number of the discovery resource sets in the system discovery resources, determine physical resources corresponding to each discovery resource set in accordance with the number of the discovery resource sets and the system discovery resources, and select the discovery resource set desired for the transmission of the D2D discovery signal.

Alternatively, the processor may be configured to read a program stored in the memory, so as to: determine the number of the discovery resource sets in the system discovery resources in accordance with a mapping relationship between a size of the system discovery resources and the number of the discovery resource sets, or determine the number of the discovery resource sets in the system discovery resources in accordance with a system discovery resource period and a discovery resource set period, or determine the number of the discovery resource sets in the system discovery resources in accordance with indication information indicating the number of the discovery resource sets from a network side or cluster head.

Alternatively, the mapping relationship may be pre-agreed, or indicated by the network side or the cluster head, and the discovery resource set period may be pre-agreed, or indicated by the network side or the cluster head.

Alternatively, when determining the physical resources corresponding to each discovery resource set in accordance with the number of the discovery resource sets and the system discovery resources, the processor may be configured to read a program stored in the memory, so as to: allocate the system discovery resources within each system discovery resource period equally to each discovery resource set in accordance with the number of the discovery resource sets, so as to determine the physical resources corresponding to each discovery resource set; or select for different discovery resource sets the system discovery resources within different system discovery resource periods in accordance with a size of each system discovery resource period and the number of the discovery resource sets, so as to determine the physical resources corresponding to each discovery resource set.

Alternatively, the processor may be configured to read a program stored in the memory, so as to execute at least one of the followings: selecting the discovery resource set desired for the transmission of the D2D discovery signal in accordance with the indication information from the network side or the cluster head; selecting the discovery resource set desired for the transmission of the D2D discovery signal randomly from the plurality of discovery resource sets; selecting the discovery resource set desired for the transmission of the D2D discovery signal in accordance with an ID of the UE and a predetermined correspondence between the ID and the discovery resource set; and selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, when determining the discovery resource sets desired for the transmission of the D2D discovery signal, the processor may be configured to read a program stored in the memory, so as to acquire by calculation, from the system discovery resources, system discovery resources capable of being used by the UE to transmit the D2D discovery signal in accordance with the ID of the UE, as the discovery resource set desired for the transmission of the D2D discovery signal.

Alternatively, the ID of the UE may include at least one selected from the group consisting of a D2D ID, an application ID, a C-RNTI, a cell ID and a cluster ID.

Alternatively, when determining the discovery resource set desired for the transmission of the D2D discovery signal, the processor may be configured to read a program stored in the memory, so as to select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, the format of the D2D discovery signal may include at least one selected from the group consisting of a discovery sequence, a discovery message, a request message and a response message.

According to the embodiments of the present disclosure, the D2D discovery signal is transmitted by the UE using the physical resources in the discovery resource set. As a result, it is able for the UE to use a part of the system discovery resources to transmit the D2D discovery signal, thereby to prevent a large number of UEs from using identical system discovery resources to transmit the D2D discovery signals, prevent the occurrence of mutual interference due to the simultaneous transmission of too many discovery signals, and prevent the normal communication from being adversely affected.

### BRIEF DESCRIPTION OF THE DRAWINGS

Fig.1 is a schematic view showing a conventional communication procedure between UEs over a network;
Fig.2 is a schematic view showing a direct communication procedure between the UEs over the network in the related art;
Figs.3-5 are schematic views showing a discovery procedure between the UEs in the related art;
Fig.6 is a schematic view showing subframes corresponding to system discovery resources;
Fig.7 is a flow chart of a method for transmitting a D2D discovery signal according to one embodiment of the present disclosure;
Figs.8 and 9 are schematic views showing different discovery resource sets in system discovery resources for the method according to one embodiment of the present disclosure;
Fig.10 is a block diagram of a device for transmitting a D2D discovery signal according to one embodiment of the present disclosure;
Fig.11 is a block diagram of a UE according to one embodiment of the present disclosure; and
Fig.12 is a block diagram of a computer capable of achieving the method according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

The present disclosure provides in some embodiments a method for transmitting a D2D discovery signal which, as shown in Fig.7, includes Step S701 of determining, by a UE, system discovery resources, Step S703 of determining, by the UE, a discovery resource set desired for the transmission of the D2D discovery signal, and Step S705 of transmitting, by the UE, the D2D discovery signal through physical resources corresponding to the determined discovery resource set. The system discovery resources may include a plurality of discovery resource sets, and the physical resources corresponding to different discovery resource sets may be partially or completely different from each other. The discovery source set may also be referred to as discovery resource pool.

The modes in which a UE determines the discovery resource set desired for the transmission of the D2D discovery signal will be described hereinafter.

### First Mode

When the system discovery resources include a plurality of discovery resource sets configured by a base station for the UE or pre-configured at a UE side, the UE may select the discovery resource set desired for the transmission of the D2D discovery signal from the plurality of discovery resource sets.

### Second Mode

When determining the discovery resource set desired for the transmission of the D2D discovery signal, the number of the discovery resource sets in the system discovery resources may be determined at first, then the physical resources corresponding to each discovery resource set may be determined in accordance with the number of the discovery resource sets and the system discovery resources, and then the UE may select the discovery resource set desired for the transmission of the D2D discovery signal.

The number of the discovery resource sets in the system discovery resources may be determined in various ways. For example, the number of the discovery resource sets in the system discovery resources may be determined (1) in accordance with a mapping relationship between a size of the system discovery resources and the number of the discovery resource sets, or (2) in accordance with a system discovery resource period and a discovery resource set period, or (3) in accordance with indication information indicating the number of the discovery resource sets from a network side or cluster head.

The mapping relationship may be pre-agreed, or indicated by the network side (e.g., a base station) or the cluster head, and the discovery resource set period may be pre-agreed, or indicated by the network side (e.g., a base station) or the cluster head.

In addition, when determining the physical resources corresponding to each discovery resource set in accordance with the number of the discovery resource sets and the system discovery resources, the system discovery resources within each system discovery resource period may be allocated equally to each discovery resource set in accordance with the number of the discovery resource sets, so as to determine the physical resources corresponding to each discovery resource set, or the system discovery resources in different system discovery resource periods may be selected for different discovery resource sets in accordance with a size of each system discovery resource period and the number of the discovery resource sets, so as to determine the physical resources corresponding to each discovery resource set.

In addition, the step of selecting, by the UE, the discovery resource set desired for the transmission of the D2D discovery signal may include at least one of: (a) selecting the discovery resource set desired for the transmission of the D2D discovery signal in accordance with the indication information from the network side or the cluster head; (b) selecting the discovery resource set desired for the transmission of the D2D discovery signal randomly from the plurality of discovery resource sets; (c) selecting the discovery resource set desired for the transmission of the D2D discovery signal in accordance with an ID of the UE and a predetermined correspondence between the ID and the discovery resource set; and (d) selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

### Third Mode

The UE may acquire by calculation, from the system discovery resources, system discovery resources capable of being used by the UE to transmit the D2D discovery signal in accordance with the ID of the UE, as the discovery resource set desired for the transmission of the D2D discovery signal.

### Fourth Mode

The UE may select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

In the third and fourth Modes, it is unnecessary for the UE to determine all the discovery resource sets in accordance with information such as the number of the discovery resource sets, and instead, it may directly acquire the discovery resource set desired for the transmission of the D2D discovery signal by the UE itself.

In the above-mentioned modes, the ID of the UE may include at least one selected from the group consisting of a D2D ID, an application ID, a C-RNTI, a cell ID and a cluster ID, and the format of the D2D discovery signal may include at least one selected from the group consisting of a discovery sequence, a discovery message, a request message and a response message.

When a period of the discovery resource set capable of being used by the UE to transmit the D2D discovery signal is greater than the system discovery resource period and/or the number of the physical resources in the discovery resource set capable of being used by the UE to transmit the D2D discovery signal within an identical period is less than the number of the physical resources in the system discovery resources within an identical period, different D2D UEs may transmit the respective discovery signals on different resources, so as to reduce the interference between the signals and increase the discovery probability. In this way, each UE may determine the physical resources desired for the transmission of the D2D discovery signal. Through the constraint on the allocation of the discovery resources for the UEs, it is able for different UE groups to use different regions in the system discovery resources, thereby to reduce the interference between the UEs and increase the entire discovery probability for a system.

A procedure for transmitting the D2D discovery signal in accordance with the discovery resource set determined in the second Mode will be described hereinafter.
(1) The UE determines the system discovery resources desired for the reception and transmission of the D2D discovery signal in the system.
(2) The UE determines the number of the discovery resource sets in the system discovery resources, and determines the physical resources corresponding to each discovery resource set in accordance with the number of the discovery resource sets and the system discovery resources.
(2.1) The discovery resource set is a subset of the system discovery resources, and the physical resources included in different discovery resource sets are not completely the same, so that different UEs or UE groups may transmit the D2D discovery signals in different discovery resource sets.
(2.2) Usually, one discovery resource set includes one subframe set or PRB set as well as an occurrence period of the set, and this period is greater than or equal to the system discovery resource period, as shown in Fig.8.
(2.3) The UE may determine the number of the discovery resource sets in the following ways.
(2.3.1) The UE may determine the number of the discovery resource sets in accordance with a mapping relationship between a pre-agreed size of the system discovery resources and the number of the discovery resource sets, or a mapping relationship between a size of the system discovery resources indicated by a base station/cluster head and the number of the discovery resource sets. The mapping relationship may be determined by the base station/cluster head in accordance with the number of current UEs, a channel environment and a requirement on a discovery distance. The mapping relationship will be described hereinafter.
(2.3.1a) When more subframes are occupied by the discovery resources, more discovery resource sets may be adopted; otherwise, fewer discovery resource sets may be adopted. For example, the correspondence in Table 1 may be adopted.

**Table 1**

| The number of the subframes occupied by the discovery resources in each period | The number of the discovery resource sets |
|---|---|
| 8 | 1 |
| 16 | 2 |
| 48 | 3 |

(2.3.1b) When the period of the discovery resource is shorter, more discovery resource sets may be adopted; otherwise, fewer discovery resource sets may be adopted. For example, the correspondence in Table 2 may be adopted.

| System discovery resource period | The number of the discovery resource sets |
|---|---|
| 500ms | 1 |
| 1s | 2 |
| 3s | 3 |

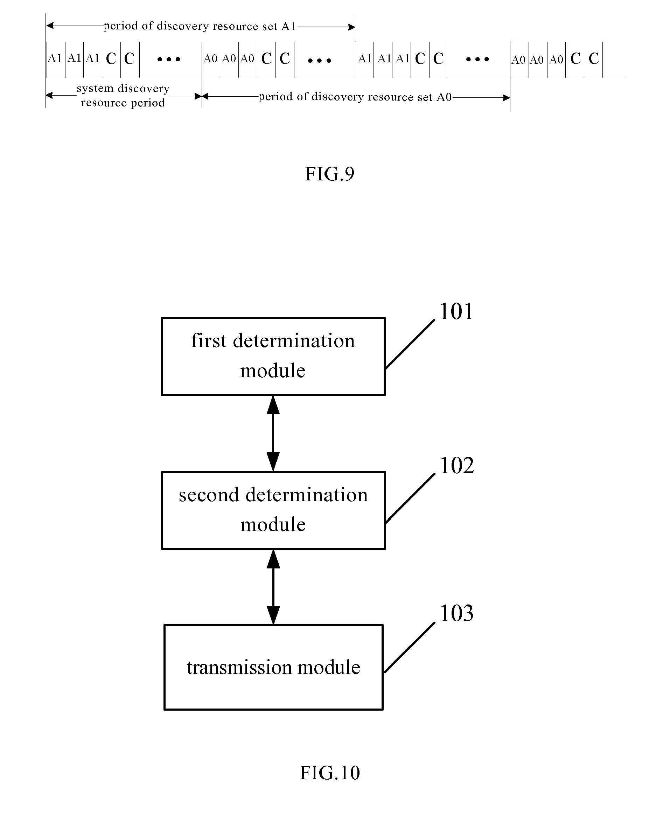

(2.3.1c) When the number of the resources in each discovery resource set is constant, the UE may acquire the number of the discovery resource sets in accordance with a size of the system discovery resources and the maximum number of the discovery resource sets that can be supported by the UE (when the number of the resources in the discovery resource set cannot be divided exactly by the number of the system discovery resources, a rounding operation may be performed). For example, when 8 subframes are occupied by each discovery resource set in each system discovery resource period and there are 32 subframes in each system discovery resource period, the number of the discovery resource sets is 4.
(2.3.2) The UE may determine the number of the discovery resource sets in accordance with the system discovery resource period as well as the discovery resource set period indicated by the base station or the cluster head. For example, the number of the discovery resource sets may be N=T1/T2, where T1 and T2 represent the discovery resource set period and the system discovery resource set respectively. When the system discovery resource period is 2s and the discovery resource set period is 8s, the number of the resource discovery sets is 4.
(2.3.3) The UE may directly receive the number of the discovery resource sets in the system discovery resources indicated by the base station or cluster head. For example, the base station or the cluster head may notify the UE of the number of the discovery resource sets in the system discovery resources via UE-dedicated high layer signaling or by system broadcasting.
(2.4) The UE may equally allocate the system discovery resources to the discovery resource sets, so as to determine the physical resources corresponding to each discovery resource set. For example, the UE may equally allocate the system discovery resources in the respective system discovery resource periods to the discovery resource sets, each discovery resource set period is identical to the system discovery resource period, and the resources in each discovery resource set period are a subset of the system discovery resources. Fig.8 shows the subframes corresponding to the discovery resource sets A1 and A0 as well as the period of each discovery resource set. For another example, the UE may also sequentially allocate the discovery resources in the respective system discovery resource periods to the discovery resource sets (the resources in each period are merely allocated to one discovery resource set). In this way, the period of each discovery resource set is N times the system discovery resource period, and the resources in each discovery resource set period are identical to the system discovery resources. Fig.9 shows the subframes corresponding to the discovery resource sets A0, A1 and A2 as well as the period of each discovery resource set.
(2.5) The UE may also select different period start positions for different discovery resource sets in accordance with a discovery resource set period, a position of the discovery resource set in the system discovery resources, and the number of the discovery resource sets, so as to determine the resources in the discovery resource sets.
(3) The UE may determine the discovery resource set desired for the transmission of the D2D discovery signal, and transmit the D2D discovery signal on the physical resources corresponding to the discovery resource set.
The UE may determine the discovery resource set desired for the transmission of the D2D discovery signal in the following ways.
(3.1.1) The UE may acquire the discovery resource set desired for the transmission of the D2D discovery signal in accordance with indication information from the base station or cluster head. For example, an index of the discovery resource set desired for the transmission of the D2D discovery signal may be indicated via UE-dedicated high layer signaling or a Downlink Control Indicator (DCI).
(3.1.2) The UE may randomly select a discovery resource set from all the discovery resource sets. The discovery resource sets selected by the UE within the discovery resource set periods may be identical (i.e., the discovery resource set may merely selected once), or different (i.e., the discovery resource set may be selected within each discovery resource set period).
(3.1.3) The UE may acquire the discovery resource set desired for the transmission of the D2D discovery signal in accordance with a pre-agreed ID of the UE and a predetermined correspondence between the ID and the discovery resource set.
(3.1.3a) For example, when the ID of the UE is K and the number of the discovery resource sets is M, the index of the discovery resource set desired for the transmission of the D2D discovery signal may be expressed as m=(K mode M).
(3.1.3b) The ID of the UE may be information capable of distinguishing different UEs or applications, e.g., a D2D ID, an application ID or a C-RNTI, or information capable of distinguishing different cells or clusters, e.g., a Cell ID or a Cluster ID, or a combination thereof.
(3.1.4) The UE may determine the discovery resource set desired for the transmission of the D2D discovery signal in accordance with a format of the D2D discovery signal to be transmitted or information carried in the D2D discovery signal.
(3.2) Usually, within each discovery resource set period, the UE may select one or more discovery resources from the physical resources corresponding to the discovery resource set so as to transmit the D2D discovery signal, and receive the D2D discovery signal from the other UE on the system discovery resources within other periods.

A procedure of transmitting the D2D discovery signal in accordance with the discovery resource set determined in the third and fourth Modes will be described hereinafter.
(1) The UE may determine the system discovery resources for transmitting and receiving the D2D discovery signal in the system.
(2) The UE may determine from the system discovery resources the discovery resource set desired for the transmission of the D2D discovery signal, and transmit the D2D discovery signal on the physical resources in the determined discovery resource set.
(2.1) The discovery resource set desired for the transmission of the D2D discovery signal is a subset of the system discovery resources.
(2.2) The UE may determine from the system discovery resources its own discovery resource set desired for the transmission of the D2D discovery signal in the following ways.
(2.2.1) The UE may acquire by calculation, from the system discovery resources, discovery resources capable of being used by the UE to transmit the D2D discovery signal in accordance with the ID of the UE and a predetermined correspondence between the ID and an index of the discovery resource desired for the transmission of the D2D discovery signal, as its own discovery resource set desired for the transmission of the D2D discovery signal (corresponding to the above-mentioned third Mode).
(2.2.1a) For example, when the ID of the UE is K, the UE may select, as its own discovery resource set desired for the transmission of the D2D discovery signal, the system discovery resources meeting a condition m=(K mode M) or (m mod M)=(K mode M), where M is a predetermined value or a configuration value, and m is an index of the system discovery resource period. For instance, when M=2 and K is an odd number, m mod M=(K mode M)=1, i.e., the UE may select the system discovery resources within an odd-numbered period as its own discovery resource set desired for the transmission of the D2D discovery signal.
(2.2.1b) For example, when the ID of the UE is K, the UE may select, as its own discovery resource set desired for the transmission of the D2D discovery signal, the physical resources corresponding to an index of the system discovery resources within each system discovery resource period and meeting a condition m=(K mode M) or (m mod M)=(K mode M), where M is a predetermined value or a configuration value, and m is an index of the PRB resource or subframe within each system discovery resource period. For instance, when M=2 and K is an even number, m=(K mode M)=0, i.e., the UE may select the 0^{th} subframe or PRB as its own discovery resource set desired for the transmission of the D2D discovery signal.
(2.2.1c) The ID of the UE may be information capable of distinguishing different UEs or applications, e.g., a D2D ID, an application ID or a C-RNTI, or information capable of distinguishing different cells or clusters, e.g., a Cell ID or a Cluster ID, or a combination thereof.
(2.2.2) The UE may determine the discovery resource set desired for the transmission of the D2D discovery signal in accordance with the format of the D2D discovery signal to be transmitted or the information carried in the D2D discovery signal (corresponding to the above-mentioned fourth Mode). The format of the D2D discovery signal may include, but be not limited to, a discovery sequence, a discovery message, a request message or a response message, and the information carried in the D2D discovery signal may include a D2D ID, an application ID or a UE type. For example, when transmitting the discovery sequence, the discovery message, the request message and the response message, the UE may transmit them using three different discovery resource sets respectively, and the discovery resource sets corresponding to the different formats of the D2D discovery signal may be pre-configured.
(2.3) Usually, within each discovery resource set period, the UE may select one or more discovery resources from the physical resources corresponding to the discovery resource set so as to transmit the D2D discovery signal, and receive the D2D discovery signal from the other UE on the system discovery resources within other periods.

The present disclosure will be described hereinafter in conjunction with the specific examples.

### First Example

In this example, the UE is located within a coverage range of a base station, and it is a D2D UE.
(1) The UE may receive information from the base station by System Information Block (SIB) broadcasting, and acquire the system discovery resources desired for the reception and transmission of the D2D discovery signal in a system through a discovery resource indicator in the information. The discovery resource indicator includes indication information indicating the discovery resources desired for the transmission of the D2D discovery signal and indication information indicating the discovery resources desired for the reception of the D2D discovery signal. The indication information indicating the discovery resources desired for the transmission of the D2D discovery signal includes indication information indicating several discovery resource sets, and the indication information indicating each discovery resource set includes a corresponding discovery resource period and an index of a subframe within the discovery resource set. For example, the current indication information indicates that three discovery resource sets are used for the transmission of the D2D discovery signal.
(2) The UE may receive information from the base station by SIB broadcasting, and acquire the three discovery resource sets desired for the transmission of the D2D discovery signal in the system through the discovery resource indicator in the information.
(3) The UE may randomly select one discovery resource set from the three discovery resource sets, and always use the physical resources corresponding to the discovery resource set to transmit the D2D discovery signal. For example, the discovery resource set 0 may be selected by the UE.
(4) Within each period of the discovery resource set 0, the UE may select one or more discovery resources from the physical resources corresponding to the discovery resource set 0, so as to transmit the D2D discovery signal.

### Second Example

In this example, the UE is located within a coverage range of a base station, and it is a D2D UE.
(1) The UE may receive information from the base station by SIB broadcasting, and acquire the system discovery resources desired for the transmission and reception of the D2D discovery signal in the system through a discovery resource indicator in the information. The discovery resource indicator includes indication information indicating the discovery resources desired for the transmission of the D2D discovery signal and indication information indicating the discovery resources desired for the reception of the D2D discovery signal, and the indication information indicating the discovery resources desired for the transmission of the D2D discovery signal includes a system discovery resource period and an index of a subframe within the system discovery resource period. For example, the indices of the subframes within the system discovery resource period in a cell where the UE is currently located are 0-2, and the period is 1s.
(2) The UE may receive information from the base station by SIB broadcasting, and acquire the number of the discovery resource sets in the system through a discovery resource set indicator in the information. For example, the base station may indicate the number of the discovery resource sets via 2-bit signaling, and the current number of the discovery resource sets is 2.
(3) The UE may sequentially allocate the discovery resources in the system discovery resource periods to each discovery resource set in accordance with a pre-agreed allocation mode (the resources within each period are merely allocated to one discovery resource set, and the resources within all periods are allocated to the discovery resource sets sequentially). In this way, the period of each discovery resource set is twice as long as the period of the system discovery resources, and the resources within one period are identical to the system discovery resources, as shown in Fig.9. The discovery resource set 0 includes the resources within an odd-numbered period, and the discovery resource set 1 includes the resources within an even-numbered period.
(4) The UE may randomly select one discovery resource set from the two discovery resource sets, and always use the physical resources corresponding to the discovery resource set to transmit the D2D discovery signal. For example, the discovery resource set 0 may be selected by the UE.
(5) Within each period of the discovery resource set 0 (the period is 2s), the UE may select one or two discovery resources from the physical resources corresponding to the discovery resource set 0 (with the indices of the subframes as 0-2) so as to transmit the D2D discovery signal, and detect the D2D discovery signal from the other UE on the other subframe of the system discovery resources.

### Third Example

In this example, the UE is located within a coverage range of a base station, and it is a D2D UE.
(1) The UE may receive information from the base station via UE-dedicated high layer signaling, and acquire the system discovery resources desired for the transmission and reception of the D2D discovery signal in the system. A discovery resource indicator includes indication information indicating the discovery resources desired for the transmission of the D2D discovery signal and indication information indicating the discovery resources desired for the reception of the D2D discovery signal. The indication information indicating the discovery resources desired for the transmission of the D2D discovery signal includes a corresponding system discovery resource period and an index of a subframe within the system discovery resource period. For example, the indices of the subframes within the system discovery resource period in a cell where the UE is currently located are 0-2, and the period T2 is 1s.
(2) The UE may receive information from the base station via UE-dedicated high layer signaling, and acquire the period of the discovery resource set in the system. For example, the base station may indicate the period of the discovery resource set via signaling with several bits, and the period T1 indicated currently is 2s.
(3) The UE may determine the number of the discovery resource sets in accordance with the system discovery resource period and the discovery resource set period. For example, the number of the discovery resource sets is N=T1/T2=2.
(4) The UE may select different resource start points for the two discovery resource sets in accordance with positions of the system discovery resources and the discovery resource set period, so that the resources in each discovery resource set period are identical to the system discovery resources, as shown in Fig.8. The discovery resource set 0 includes the resources within an odd-numbered period, and the discovery resource set 1 includes the resources within an even-numbered period.
(5) The UE may select one discovery resource set from the two discovery resource sets in accordance with its own D2D ID, and always use the physical resources corresponding to the discovery resource set to transmit the D2D discovery signal. A correspondence between an index of the discovery resource set and the D2D ID is M=(K mode 2), where M is the index of the discovery resource set and K is the D2D ID of the UE. For example, the discovery resource set 0 may be selected by the UE.
(6) Within each period of the discovery resource set 0 (the period is 2s), the UE may select one or more discovery resources from the physical resources corresponding to the discovery resource set 0 (with the indices of the subframes as 0-2) so as to transmit the D2D discovery signal, and detect the D2D discovery signal from the other UE on the other subframe of the system discovery resources.

### Fourth Example

In this example, the UE is located outside a coverage range of a base station, and it is a D2D UE.
(1) The UE may determine the system discovery resources desired for the transmission and reception of the D2D discovery signal in the system in accordance with pre-configured resources. For example, indices of subframes for the pre-configured system discovery resources are 0-2, and the period T2 is 1s.
(2) The UE may receive indication information indicating the discovery resource set from a cluster head, and acquire that the number of the discovery resource sets in the system is 3. The indication information is transmitted by SIB broadcasting.
(3) The UE may equally allocate the discovery resources in the system discovery resource periods to the respective discovery resource sets in accordance with a pre-agreed allocation mode. The period of each discovery resource set is identical to the period of the system discovery resource, and the resources in each period are a subset of the system discovery resources, as shown in Fig.8. Each discovery resource set includes different discovery subframes in one system discovery resource period.
(4) Within each discovery resource set period (the period is 1s), the UE may randomly select one discovery resource set from the three discovery resource sets, and use the physical resources corresponding to the discovery resource set to transmit the D2D discovery signal.
(5) Within each discovery resource set period (the period is 1s), the UE may select one or more discovery resources from the physical resources corresponding to the selected the discovery resource set so as to transmit the D2D discovery signal, and detect the D2D discovery signal from the other UE on the discovery resources of the other subframe in the period. For example, when the discovery resource set 1 is selected by the UE in a certain discovery resource set period, the UE may select one discovery resource from the subframe 1 so as to transmit the D2D discovery signal, and detect the D2D discovery signal from the other UE on the subframes 0 and 2.

### Fifth Example

(1) The UE may receive information from a base station via high layer signaling, and acquire the system discovery resources desired for the transmission and reception of the D2D discovery signal. A discovery resource indicator includes indication information indicating the discovery resources desired for the transmission of the D2D discovery signal and indication information indicating the discovery resources desired for the reception of the D2D discovery signal. The indication information indicating the discovery resources desired for the transmission of the D2D discovery signal includes a corresponding system discovery resource period and an index of a subframe within the system discovery resource period. For example, the indices of the subframes within the system discovery resource period in a cell where the UE is currently located are 0-2, and the period T2 is 1s.
(2) The UE may select, in the following way, a part of the system discovery resources as the discovery resource set desired for the transmission of the D2D discovery signal in accordance with a Cell ID of a serving cell where the UE is located and a D2D ID Of the UE itself. The specific selection method may include:
(2.1) At first, the UE may determine, in accordance with the Cell ID, the system discovery resources in the periods included in the discovery resource sets, i.e., it may select, as candidate discovery resource sets, the system discovery resources meeting a condition (m mod M)=(Cell ID mode M), where M=the discovery resource set period/the system discovery resource period, and m is an index of the system discovery resource period.
(2.2) Then, the UE may determine, in accordance with the D2D ID, in the previous candidate discovery resource sets the resources capable of being used to transmit the D2D discovery signal. In other words, within each discovery resource set period, the UE may select the physical resource corresponding to indices of the resources meeting a condition (k mod K)=(D2D ID mode K) as the target discovery resource set, where k is the index of the resource, and the K is a predetermined value.
(3) Within each discovery resource set period, the UE may select one or more discovery resources from the determined discovery resource set so as to transmit the D2D discovery signal, and detect the D2D discovery signal from the other UE on the discovery resources of the other subframe within the period.

It should be appreciated that, Figs.8-9, Tables 1-2 and the above-mentioned examples are for illustrative purposes only, and more discovery resource sets with more complex subframe arrangement may also be involved in the present disclosure, which are not particularly defined herein.

According to the method for transmitting the D2D discovery signal in the embodiments of the present disclosure, it is able to divide the discovery resources into different sets in accordance with the size of the system discovery resources. Through the constraints on the discovery resource allocation for the UEs, different UE groups may use different regions in the system discovery resources, so as to reduce the interference between the UEs, and increase the discovery probability of the entire system. For example, when there are fewer system discovery resources, it is able to prevent the interference between the UEs, without obviously increasing the discovery delay for the UEs.

The present disclosure further provides in some embodiments a device for transmitting a D2D discovery signal which, as shown in Fig.10, includes a first determination module 101 configured to determine system discovery resources; a second determination module 102 configured to determine a discovery resource set desired for the transmission of the D2D discovery signal; and a transmission module 103 configured to transmit the D2D discovery signal through physical resources corresponding to the determined discovery resource set. The system discovery resources may include a plurality of discovery resource sets.

Alternatively, when determining the system discovery resources, the first determination module 101 is configured to determine the plurality of discovery resource sets included in the system discovery resources, and when determining the discovery resource set desired for the transmission of the D2D discovery signal, the second determination module 102 is configured to select the discovery resource set desired for the transmission of the D2D discovery signal from the determined discovery resource sets. The plurality of discovery resource sets is configured by a base station for the device, or pre-configured at a device side.

Alternatively, when determining the discovery resource set desired for the transmission of the D2D discovery signal, the second determination module 102 is further configured to determine the number of the discovery resource sets in the system discovery resources, determine physical resources corresponding to each discovery resource set in accordance with the number of the discovery resource sets and the system discovery resources, and select the discovery resource set desired for the transmission of the D2D discovery signal.

Alternatively, the second determination module 102 is further configured to determine the number of the discovery resource sets in the system discovery resources in accordance with a mapping relationship between a size of the system discovery resources and the number of the discovery resource sets, or determine the number of the discovery resource sets in the system discovery resources in accordance with a system discovery resource period and a discovery resource set period, or determine the number of the discovery resource sets in the system discovery resources in accordance with indication information indicating the number of the discovery resource sets from a network side or cluster head.

Alternatively, the mapping relationship is pre-agreed, or indicated by the network side or the cluster head, and the discovery resource set period is pre-agreed, or indicated by the network side or the cluster head.

Alternatively, when determining the physical resources corresponding to each discovery resource set in accordance with the number of the discovery resource sets and the system discovery resources, the second determination module 102 is further configured to allocate the system discovery resources within each system discovery resource period equally to each discovery resource set in accordance with the number of the discovery resource sets, so as to determine the physical resources corresponding to each discovery resource set; or select for different discovery resource sets the system discovery resources in different system discovery resource periods in accordance with a size of each system discovery resource period and the number of the discovery resource sets, so as to determine the physical resources corresponding to each discovery resource set.

Alternatively, the second determination module 102 is configured to select the discovery resource set desired for the transmission of the D2D discovery signal in at least one of the following ways: select the discovery resource set desired for the transmission of the D2D discovery signal in accordance with the indication information from the network side or the cluster head; select the discovery resource set desired for the transmission of the D2D discovery signal randomly from the plurality of discovery resource sets; select the discovery resource set desired for the transmission of the D2D discovery signal in accordance with an ID of the UE and a predetermined correspondence between the identifier and the discovery resource set; and select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

Alternatively, when determining the discovery resource set desired for the transmission of the D2D discovery signal, the second determination module 102 is further configured to acquire by calculation, from the system discovery resources, system discovery resources capable of being used by the device to transmit the D2D discovery signal in accordance with the ID of the UE, as the discovery resource set desired for the transmission of the D2D discovery signal (corresponding to the above-mentioned second Mode).

Alternatively, the ID of the UE includes at least one selected from the group consisting of a D2D ID, an application ID, a C-RNTI, a cell ID and a cluster ID.

Alternatively, when determining the discovery resource set desired for the transmission of the D2D discovery signal, the second determination module 102 is further configured to select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set (corresponding to the above-mentioned third Mode).

Alternatively, the format of the D2D discovery signal includes at least one selected from the group consisting of a discovery sequence, a discovery message, a request message and a response message.

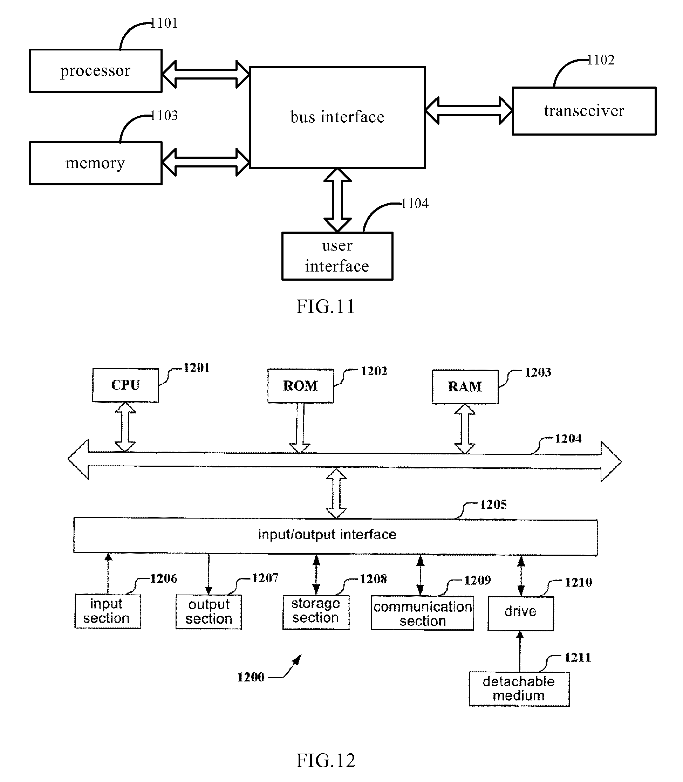

The present disclosure further provides in some embodiments a UE which, as shown in Fig.11, includes a processor 1101, a transceiver 1102 and a memory 1103. The processor 1101 is configured to read a program stored in the memory 1103 so as to determine system discovery resources, determine a discovery resource set desired for the transmission of a D2D discovery signal, and transmit, via the transceiver 1102, the D2D discovery signal through physical resources corresponding to the determined discovery resource set. The transceiver 1102 is configured to receive and transmit data under the control of the processor 1101.

In Fig.11, a bus architecture may include a number of buses and bridges connected to each other, so as to connect various circuits for one or more processors 1101 and one or more memories 1103. In addition, as is known in the art, the bus architecture may be used to connect any other circuits, such as a circuit for a peripheral device, a circuit for a voltage stabilizer and a power management circuit. Bus interfaces are provided, and the transceiver 1102 may consist of a plurality of elements, i.e., it may include a transmitter and a receiver for communication with any other devices over a transmission medium. With respect to different UEs, a user interface 1104 may also be provided for devices which are to be arranged inside or outside the UE, and these devices may include but be not limited to a keypad, a display, a speaker, a microphone and a joystick.

The processor 1101 takes charge of managing the bus architecture as well as general processings. The memory 1103 may store data desired for the operation of the processor 1101.

In a word, according to the embodiments of the present disclosure, the D2D discovery signal is transmitted by the UE using a part of the system discovery resources. As a result, it is able to prevent a large number of UEs from using an identical system discovery resource to transmit the D2D discovery signals, prevent the occurrence of mutual interference due to too many discovery signals transmitted simultaneously, and prevent the normal communication from being adversely affected, thereby to improve the discovery performance between the UEs.

A basic principle of the present disclosure has been described hereinbefore in conjunction with the embodiments. However, it should be appreciated that, after reviewing the descriptions of the present disclosure, it is able for a person skilled in the art, using a basic programming skill, to implement any or all steps of the method and any or all members of the device in any computing device (including a processor and a storage medium) or a network consisting of the computing devices, in the form of hardware, firmware, software or a combination thereof.

Hence, the purposes of the present disclosure may also be implemented by one program or a set of programs running on any computing device, e.g., a known general-purpose computer, or implemented merely by a program product including program codes capable of implementing the method or device. In other words, this program product and a storage medium storing therein also constitute a part of the present disclosure. Obviously, the storage medium may be any known storage medium or a storage medium that may occur in future.

The present disclosure further provides in some embodiments a storage medium (e.g., a Read Only Memory (ROM), a Random Access Memory (RAM), a hard disk, or a detachable memory). A computer program for transmitting the D2D discovery signal may be stored in the storage medium and include program codes so as to determine the system discovery resources, determine the discovery resource set desired for the transmission of the D2D discovery signal, and transmit the D2D discovery signal through the physical resources corresponding to the determined discovery resource set.

The present disclosure further provides in some embodiments a computer program including program codes, so as to determine the system discovery resources, determine the discovery resource set desired for the transmission of the D2D discovery signal, and transmit the D2D discovery signal through the physical resources corresponding to the determined discovery resource set.

In the case that the present disclosure is implemented in the form of software and/or firmware, programs may be installed in a computer with a dedicated hardware structure, e.g., a general-purpose computer 1100 in Fig.11, via the storage medium or a network, so as to achieve various functions.

In Fig.12, a Central Processing Unit (CPU) 1201 may execute various processings in accordance with the programs stored in a ROM 1202 or the programs loaded into a RAM 1203 via a storage section 1208. Data desired for the operation of the CPU 1201 may also be stored in the RAM 1203 according to the practical need. The CPU 1201, the ROM 1202 and the RAM 1203 are connected to each other via a bus 1204. In addition, an input/output interface 1205 is also connected to the bus 1204.

An input section 1206 (including a keyboard and a mouse), an output section 1207 (including a display such as Cathode Ray Tube (CRT) or a Liquid Crystal Display (LCD), and a speaker), a storage section 1208 (including a hard disk) and a communication section 1209 (including a network interface card such as Local Area Network (LAN) card, and a Modem) may also be connected to the input/output interface 1205. The communication section 1209 is configured to perform the communication over a network, e.g., Internet.

If desired, a driver 1210 may also be connected to the input/output interface 1205, and a detachable storage medium 1211 such as a magnetic disk, an optical disk, a magneto-optical disk or a semiconductor memory may be installed on the driver 1210, so as to read the computer programs therefrom and install them into the storage section 1208.

In the case that the above-mentioned processings are implemented via software, the programs may be installed from the network, e.g., Internet, or the storage medium, e.g., the detachable storage medium 1211.

It should be appreciated that, the storage medium is not limited to the detachable storage medium 1211 in Fig.12 in which the programs are stored and which may be distributed in such a manner as to be detachable from the device so as to provide the programs to a user. The detachable storage medium 1211 may include a magnetic disk (including a floppy disk (registered trademark), an optical disk (including Compact Disk Read Only Memory (CD-ROM) and Digital Video Disk (DVD), a magneto-optical disk (including Mini Disk (registered trademark) and a semiconductor memory. Alternatively, the storage media may be a hard disk included in the storage section 1208 and the ROM 1202 in which the programs are stored, and the storage media may be distributed to the user together with the device including them.

It should be further appreciated that, according to the device and the method in the embodiments of the present disclosure, the members or steps may be subdivided and/or recombined, and the subdivided and/or recombined members or steps shall also be deemed as equivalents of the present disclosure. In addition, the steps for executing the above-mentioned processings may be performed in a chronological order. Of course, some steps may also be performed in parallel, or independently of each other.

Although the present disclosure and its advantages have been described hereinabove, it should be appreciated that, various modifications, substitutions and alternations may be further made without departing from the spirit and scope defined by the appended claims. Such terms as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

## Claims

1. A method for transmitting a Device-to-Device (D2D) discovery signal, comprising steps of:
determining, by a User Equipment (UE), system discovery resources;
determining, by the UE, a discovery resource set desired for the transmission of the D2D discovery signal; and
transmitting, by the UE, the D2D discovery signal through physical resources corresponding to the determined discovery resource set.

2. The method according to claim 1, wherein the step of determining, by the UE, the system discovery resources comprises: determining, by the UE, a plurality of discovery resource sets included in the system discovery resources, and
the step of determining, by the UE, the discovery resource set desired for the transmission of the D2D discovery signal comprises: selecting, by the UE, the discovery resource set desired for the transmission of the D2D discovery signal from the determined discovery resource sets.

3. The method according to claim 2, wherein the plurality of discovery resource sets is configured by a base station for the UE, or pre-configured at a UE side.

4. The method according to claim 1, wherein the step of determining, by the UE, the discovery resource set desired for the transmission of the D2D discovery signal comprises:
determining, by the UE, the number of the discovery resource sets in the system discovery resources;
determining physical resources corresponding to each discovery resource set in accordance with the number of the discovery resource sets and the system discovery resources; and
selecting the discovery resource set desired for the transmission of the D2D discovery signal.

5. The method according to claim 4, wherein the step of determining the number of the discovery resource sets in the system discovery resources comprises:
determining the number of the discovery resource sets in the system discovery resources in accordance with a mapping relationship between a size of the system discovery resources and the number of the discovery resource sets; or
determining the number of the discovery resource sets in the system discovery resources in accordance with a system discovery resource period and a discovery resource set period; or
determining the number of the discovery resource sets in the system discovery resources in accordance with indication information indicating the number of the discovery resource sets from a network side or cluster head.

6. The method according to claim 5, wherein the mapping relationship is pre-agreed, or indicated by the network side or the cluster head.

7. The method according to claim 5, wherein the discovery resource set period is pre-agreed, or indicated by the network side or the cluster head.

8. The method according to claim 4, wherein the step of determining the physical resources corresponding to each discovery resource set in accordance with the number of the discovery resource sets and the system discovery resources comprises:
allocating the system discovery resources within each system discovery resource period equally to each discovery resource set in accordance with the number of the discovery resource sets, so as to determine the physical resources corresponding to each discovery resource set; or
selecting for different discovery resource sets the system discovery resources within different system discovery resource periods in accordance with a size of each system discovery resource period and the number of the discovery resource sets, so as to determine the physical resources corresponding to each discovery resource set.

9. The method according to claim 2 or 4, wherein the step of selecting, by the UE, the discovery resource set desired for the transmission of the D2D discovery signal comprises at least one of:
selecting the discovery resource set desired for the transmission of the D2D discovery signal in accordance with the indication information from the network side or the cluster head;
selecting the discovery resource set desired for the transmission of the D2D discovery signal randomly from the plurality of discovery resource sets;
selecting the discovery resource set desired for the transmission of the D2D discovery signal in accordance with an identifier (ID) of the UE and a predetermined correspondence between the ID and the discovery resource set; and
selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

10. The method according to claim 1, wherein the step of determining, by the UE, the discovery resource set desired for the transmission of the D2D discovery signal comprises: acquiring by calculation, from the system discovery resources, system discovery resources capable of being used by the UE to transmit the D2D discovery signal in accordance with the ID of the UE, as the discovery resource set desired for the transmission of the D2D discovery signal.

11. The method according to claim 9, wherein the ID of the UE comprises at least one selected from the group consisting of a D2D ID, an application ID, a Cell Radio Network Temporary Identifier (C-RNTI), a cell ID and a cluster ID.

12. The method according to claim 10, wherein the ID of the UE comprises at least one selected from the group consisting of a D2D ID, an application ID, a Cell Radio Network Temporary Identifier (C-RNTI), a cell ID and a cluster ID.

13. The method according to claim 1, wherein the step of determining, by the UE, the discovery resource set desired for the transmission of the D2D discovery signal comprises: selecting the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

14. The method according to claim 9, wherein the format of the D2D discovery signal comprises at least one selected from the group consisting of a discovery sequence, a discovery message, a request message and a response message.

15. The method according to claim 13, wherein the format of the D2D discovery signal comprises at least one selected from the group consisting of a discovery sequence, a discovery message, a request message and a response message.

16. A device for transmitting a Device-to-Device (D2D) discovery signal, comprising:
a first determination module configured to determine system discovery resources;
a second determination module configured to determine a discovery resource set desired for the transmission of the D2D discovery signal; and
a transmission module configured to transmit the D2D discovery signal through physical resources corresponding to the determined discovery resource set.

17. The device according to claim 16, wherein when determining the system discovery resources, the first determination module is configured to determine a plurality of discovery resource sets included in the system discovery resources; and
when determining the discovery resource set desired for the transmission of the D2D discovery signal, the second determination module is configured to select the discovery resource set desired for the transmission of the D2D discovery signal from the determined discovery resource sets.

18. The device according to claim 17, wherein the plurality of discovery resource sets is configured by a base station for the device, or pre-configured at a device side.

19. The device according to claim 16, wherein when determining the discovery resource set desired for the transmission of the D2D discovery signal, the second determination module is configured to determine the number of the discovery resource sets in the system discovery resources, determine physical resources corresponding to each discovery resource set in accordance with the number of the discovery resource sets and the system discovery resources, and select the discovery resource set desired for the transmission of the D2D discovery signal.

20. The device according to claim 19, wherein the second determination module is further configured to:
determine the number of the discovery resource sets in the system discovery resources in accordance with a mapping relationship between a size of the system discovery resources and the number of the discovery resource sets; or
determine the number of the discovery resource sets in the system discovery resources in accordance with a system discovery resource period and a discovery resource set period; or
determine the number of the discovery resource sets in the system discovery resources in accordance with indication information indicating the number of the discovery resource sets from a network side or cluster head.

21. The device according to claim 20, wherein the mapping relationship is pre-agreed, or indicated by the network side or the cluster head.

22. The device according to claim 20, wherein the discovery resource set period is pre-agreed, or indicated by the network side or the cluster head.

23. The device according to claim 19, wherein when determining the physical resources corresponding to each discovery resource set in accordance with the number of the discovery resource sets and the system discovery resources, the second determination module is configured to allocate the system discovery resources within each system discovery resource period equally to each discovery resource set in accordance with the number of the discovery resource sets, so as to determine the physical resources corresponding to each discovery resource set; or select for different discovery resource sets the system discovery resources within different system discovery resource periods in accordance with a size of each system discovery resource period and the number of the discovery resource sets, so as to determine the physical resources corresponding to each discovery resource set.

24. The device according to claim 13 or 19, wherein the second determination module is configured to select the discovery resource set desired for the transmission of the D2D discovery signal in at least one of the following ways:
select the discovery resource set desired for the transmission of the D2D discovery signal in accordance with the indication information from the network side or the cluster head;
select the discovery resource set desired for the transmission of the D2D discovery signal randomly from the plurality of discovery resource sets;
select the discovery resource set desired for the transmission of the D2D discovery signal in accordance with an identifier (ID) of the UE and a predetermined correspondence between the identifier and the discovery resource set; and
select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

25. The device according to claim 16, wherein when determining the discovery resource set desired for the transmission of the D2D discovery signal, the second determination module is configured to acquire by calculation, from the system discovery resources, system discovery resources capable of being used by the device to transmit the D2D discovery signal in accordance with the ID of the UE, as the discovery resource set desired for the transmission of the D2D discovery signal.

26. The device according to claim 24, wherein the ID of the UE comprises at least one selected from the group consisting of a D2D ID, an application ID, a Cell Radio Network Temporary Identifier (C-RNTI), a cell ID and a cluster ID.

27. The device according to claim 25, wherein the ID of the UE comprises at least one selected from the group consisting of a D2D ID, an application ID, a C-RNTI, a cell ID and a cluster ID.

28. The device according to claim 16, wherein when determining the discovery resource set desired for the transmission of the D2D discovery signal, the second determination module is configured to select the discovery resource set desired for the transmission of the D2D discovery signal in accordance with a format of the D2D discovery signal to be transmitted and/or information carried in the D2D discovery signal, and a predetermined correspondence between the format of the D2D discovery signal and/or the information carried in the D2D discovery signal and the discovery resource set.

29. The device according to claim 24, wherein the format of the D2D discovery signal comprises at least one selected from the group consisting of a discovery sequence, a discovery message, a request message and a response message.

30. The device according to claim 28, wherein the format of the D2D discovery signal comprises at least one selected from the group consisting of a discovery sequence, a discovery message, a request message and a response message.
